# EUROPÄISCHE PATENTSCHRIFT

(11) **EP 0 837 352 B1**
(45) Veröffentlichungstag und Bekanntmachung des Hinweises auf die Patenterteilung: **14.05.2003**
(21) Anmeldenummer: 97250309.8
(22) Anmeldetag: 20.10.1997
(51) Int. Cl.: G02F 1/025

(54) **Halbleiterkörper mit Heizeinrichtung zum Beeinflussen von Licht**
Semiconductor body comprising a heating element for modulating light
Corps semi-conducteur, muni d'un élement de chauffage, pour la modulation de la lumière

(30) Priorität: 21.10.1996 DE 19644619
(43) Veröffentlichungstag der Anmeldung: 22.04.1998
(73) Patentinhaber: Infineon Technologies AG, 81669 München (DE)
(72) Erfinder: Fischer, Uwe, 13597 Berlin (DE)
(74) Vertreter: Müller, Wolfram Hubertus, Dr. Dipl.-Phys.

(56) Entgegenhaltungen:
- HOFFMANN M ET AL: "Thermo-optical digital switches on silicon" ECIO 95 PROCEEDINGS. 7TH EUROPEAN CONFERENCE ON INTEGRATED OPTICS WITH TECHNICAL EXHIBITION. REGULAR AND INVITED PAPERS, PROCEEDINGS OF ECIO 95 - 7TH EUROPEAN CONFERENCE ON INTEGRATED OPTICS, DELFT, NETHERLANDS, 3-6 APRIL 1995, Seiten 403-406 vol.1, XP002123267 1995, Delft, Netherlands, Delft University Press, Netherlands ISBN: 90-407-1111-9
- FISCHER U ET AL: "SINGLEMODE OPTICAL SWITCHES BASED ON SOI WAVEGUIDES WITH LARGE CROSS-SECTION" ELECTRONICS LETTERS,GB,IEE STEVENAGE, Bd. 30, Nr. 5, Seite 406-408 XP000442911 ISSN: 0013-5194
- FISCHER U ET AL: "INTEGRATED OPTICAL WAVEGUIDE SWITCHES IN SOI" PROCEEDINGS OF THE ANNUAL SOS/SOI TECHNOLOGY CONFERENCE. (FROM 1995 PROCEEDINGS OF THE INTERNATIONAL SOI CONFERENCE.) SILICON-ON-INSULATOR TECHNOLOGY AND DEVICES,US,NEW YORK, IEEE, Seite 141-142 XP000590652 ISBN: 0-7803-2548-6
- SUGITA A ET AL: "BRIDGE-SUSPENDED SILICA-WAVEGUIDE THERMO-OPTIC PHASE SHIFTER AND ITS APPLICATION TO MACH-ZEHNDER TYPE OPTICAL SWITCH" TRANSACTIONS OF THE INSTITUTE OF ELECTRONICS, INFORMATION AND COMMUNICATION ENGINEERS OF JAPAN,JP,INST. OF ELECTRONICS & COMMUNIC. ENGINEERS OF JAPAN. TOKYO, Bd. E73, Nr. 1, Seite 105-108 XP000103975
- VOGES E ET AL: "Optical waveguides on silicon combined with micromechanical structures" DIGEST. IEEE/LEOS 1996 SUMMER TOPICAL MEETINGS. ADVANCED APPLICATIONS OF LASERS IN MATERIALS PROCESSING;BROADBAND OPTICAL NETWORKS - ENABLING TECHNOLOGIES AND APPLICATIONS; SMART PIXELS; OPTICAL MEMS AND THEIR APPLICATIONS (CAT. NO.96TH8164), DIGEST , Seiten 69-70, XP002123268 1996, New York, NY, USA, IEEE, USA ISBN: 0-7803-3175-3
- HIMENO A ET AL: "Silica-based low loss and high extinction ratio 8*8 thermo-optic matrix switch with path-independent loss arrangement using double Mach-Zehnder interferometer switching units" ECOC '96. 22ND EUROPEAN CONFERENCE ON OPTICAL COMMUNICATION (IEEE CAT. NO.96TH8217), PROCEEDINGS OF EUROPEAN CONFERENCE ON OPTICAL COMMUNICATION, OSLO, NORWAY, 15-19 SEPT. 1996, Seiten 149-152 vol.4, XP002123269 1996, Kjeller, Norway, Telenor, Norway ISBN: 82-423-0418-1

## Beschreibung

Die Erfindung bezieht sich auf einen Halbleiterkörper aus einem Siliziumsubstrat, einer darauf befindlichen Siliziumdioxidschicht und einer darauf vorgesehenen Siliziumschicht zum Beeinflussen von Licht mit in der Siliziumschicht gebildeten, integriert-optischen Wellenleitern und einer Heizeinrichtung an mindesten einem der Wellenleitern.

Ein Halbleiterkörper dieser Art (U. Fischer, T. Zinke, B. Schüppert, K. Petermann, ,Concepts for Optical Waveguide Switches in Silicon", Europto '95, European Conference on Advanced Networks and Services 1995, Fiber Optic Network Components, Proceedings SPIE 2449, Amsterdam, Niederlande, 1995, pp. 332-339) basiert auf SOI (silicon-on-insulator)-Material, das aus einem Siliziumsubstrat, einer darauf aufgebrachten Siliziumdioxidschicht und einer darauf befindlichen Siliziumschicht besteht. Zum Schalten von Licht ist der bekannte Halbleiterkörper in einem der beiden Wellenleiterzweige eines Mach-Zehnder-Interferometers integriert. Auf einem Rippenwellenleiter des bekannten Halbleiterkörpers ist - durch eine Pufferschicht getrennt - eine Heizeinrichtung in Form eines Titanheizstreifens aufgebracht. Mittels der Heizeinrichtung wird die Siliziumschicht im Bereich des Rippenwellenleiters erwärmt und die Brechzahl der Siliziumschicht dort vergrößert. Diese Brechzahlvergrößerung führt zu einer Verringerung der Phasengeschwindigkeit des Lichtes in dem Wellenleiterzweig mit dem bekannten Halbleiterkörper und somit zum Schalten des Lichtes im Mach-Zehnder-Interferometer. Im Bereich der Heizeinrichtung befinden sich neben dem Rippenwellenleiter geätzte V-Nuten, die einen lateralen Wärmefluß der von der Heizeinrichtung erzeugten Wärme in der Siliziumschicht unterbinden. Eine vertikale thermische Isolation zwischen der Siliziumschicht und dem Siliziumsubstrat wird durch die Siliziumdioxidschicht hervorgerufen, die eine ca. einhundertmal kleinere spezifische thermische Leitfähigkeit als Silizium aufweist.

Der Erfindung liegt die Aufgabe zugrunde, einen Halbleiterkörper anzugeben, der mit noch geringerer Schaltleistung zum Beeinflussen von Licht auskommt als der bekannte Halbleiterkörper. Im übrigen ist ein thermo-optisches Schaltelement mit Glaswellenleitern bekannt (Sugita et al., Bridge-suspended- waveguide Thermo-optic Phase Shifter and Its Application to Mach Zehnder Type Optical Switch", The Transactions of the IEICE, Vol. E 73, No 1, January 1990). Die Glaswellenleiter sind auf einem Silizium-Substrat angebracht und werden mit einer Heizeinrichtung erwärmt. Im Bereich der Heizeinrichtung ist das Silizium-Substrat unter den Wellenleitern entfernt.

Diese Aufgabe wird erfindungsgemäß durch einen Halbleiterkörper mit den Kennzeichnenden Merkmalen des Anspruchs 1 gelöst.

Der wesentliche Vorteil des erfindungsgemäßen Halbleiterkörpers besteht darin, daß durch das Ersetzen der Siliziumdioxidschicht durch eine thermisch besser isolierende Isolationsschicht besonders schaltleistungsarme Halbleiterkörper herstellbar sind.

Ein weiterer Vorteil der erfindungsgemäßen Anordnung besteht darin, daß für Halbleiterkörper zum Beeinflussen von Licht auch SOI-Material verwendet werden kann, dessen Siliziumdioxidschicht relativ dünn ist und somit thermisch nur wenig isoliert(z. B. SIMOX-SOI (SIMOX: Separation by Implantation of Oxygen)).

Leicht zu verarbeitende Materialien mit sehr geringer thermischer Leitfähigkeit sind beispielsweise Kunststoffe, so daß es als vorteilhaft erachtet wird, wenn die Isolationsschicht aus einem Kunststoff besteht.

Thermisch schlecht leitfähig sind außerdem Gase und Vakuum, so daß es als vorteilhaft angesehen wird, wenn die Isolationsschicht durch Gas oder Vakuum gebildet ist.

Die Erfindung bezieht sich außerdem auf ein Verfahren zum Herstellen eines Halbleiterkörpers aus einem Siliziumsubstrat, einer darauf befindlichen Siliziumdioxidschicht und einer darauf vorgesehenen Siliziumschicht zum Beeinflussen von Licht, bei dem in der Siliziumschicht integriert-optische Wellenleiter gebildet werden und eine Heizeinrichtung an mindestens einem der Wellenleiter hergestellt wird. Ein derartiges Verfahren kann der Fachzeitschrift Electronics Letters, Vol. 30, No. 5, 1994, S. 406 - 408 entnommen werden.

Um besonders schaltleistungsarme Halbleiterkörper herstellen zu können, werden erfindungsgemäß die Verfahrensschritte gemäß den den Kennzeichnenden Merkmalen des Anspruchs 4 durchgefürt.

Der wesentliche Vorteil des erfindungsgemäßen Verfahrens besteht darin, daß mit relativ einfachen Ätzschritten die erforderliche Heizleistung des Halbleiterkörpers zum Beeinflussen von Licht deutlich reduziert werden kann. Das Entfernen der Siliziumdioxidschicht kann beispielsweise durch einen Ätzschritt mit Flußsäure erreicht werden.

Soll der in dieser Weise gebildete Hohlraum mit einem Material geringer thermischer Leitfähigkeit gefüllt werden, kann es unter Umständen vorteilhaft sein, wenn durch den oder einen weiteren Ätzschritt ein Teil des Siliziumsubstrates entfernt wird.

Um eine gute thermische Isolation zwischen der Siliziumschicht und dem Siliziumsubstrat im Bereich der Heizeinrichtung zu erzielen, wird es als vorteilhaft erachtet, wenn der durch den einen Ätzschritt oder die Ätzschritte erzeugte Hohlraum unter Bildung einer Isolationsschicht mit einem Kunststoff oder mit einem Gas gefüllt wird.

Eine gute thermische Isolation bietet auch Vakuum, so daß es ebenfalls als vorteilhaft angesehen wird, wenn der durch den einen Ätzschritt oder die Ätzschritte erzeugte Hohlraum unter Bildung einer Isolationsschicht evakuiert wird.

Zur Erläuterung der Erfindung ist in
Figur 1 eine Prinzipdarstellung eines Mach-Zehnder-Interferometers, in
Figur 2 ein Querschnitt durch ein Ausführungsbeispiel des erfindungsgemäßen Halbleiterkörpers und in
Figuren 3 bis 7 anhand verschiedener Herstellungsstadien der Ablauf eines Ausführungsbeispiels eines Verfahrens zum Herstellen des erfindungsgemäßen Halbleiterkörpers dargestellt.

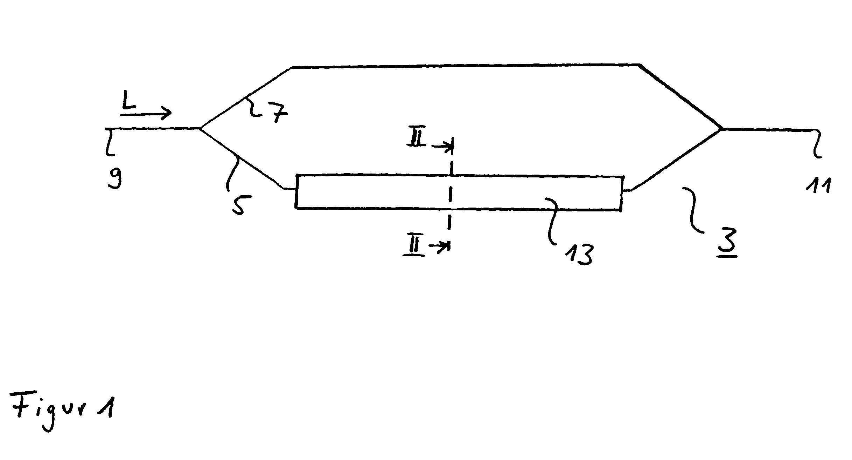

In den Figuren 1 bis 7 werden für gleiche Schichten bzw. Elemente die gleichen Bezugszeichen verwendet.

Figur 1 zeigt eine Draufsicht auf eine prinzipielle Darstellung eines Mach-Zehnder-Interferometers 3, bei dem eine Lichtwelle bzw. mehrere Lichtwellen L über Wellenleiterzweige 5 und 7 von einem Eingang 9 zu einem Ausgang 11 gelangen. An dem einen der beiden Wellenleiterzweige 5 ist eine Heizeinrichtung 13 angebracht. Im Bereich der Heizeinrichtung 13 ist der erfindungsgemäße Halbleiterkörper vorgesehen.

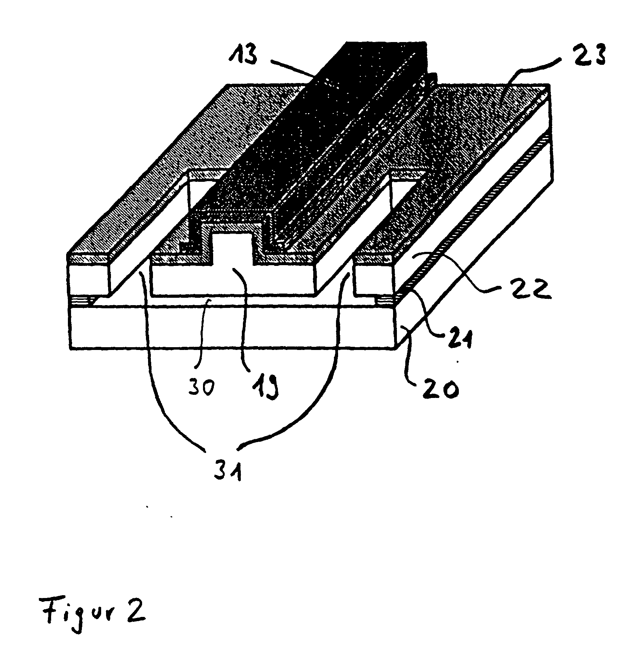

Figur 2 gibt im Schnitt entlang der Linie II-II nach Figur 1 perspektivisch die Ausgestaltung des erfindungsgemäßen Halbleiterkörpers wieder. Auf einem Siliziumsubstrat 20 befindet sich eine Siliziumdioxidschicht 21, auf der eine Siliziumschicht 22 aufliegt. Auf der Siliziumschicht 22 befindet sich eine Pufferschicht 23. Es läßt sich erkennen, daß unter der Heizeinrichtung 13 die Siliziumdioxidschicht 21 entfernt ist.

Dadurch wird eine Isolationsschicht 30 zwischen der Siliziumschicht 22 und dem Siliziumsubstrat 20 gebildet, die in diesem Ausführungsbeispiel des erfindungsgemäßen Halbleiterkörpers aus Luft besteht. Statt dessen kann die Isolationsschicht 30 auch durch ein Polymer, durch Gas oder Vakuum gebildet werden. Neben einem in die Siliziumschicht 22 geätzten SOI-Rippenwellenleiter 19 ist die Siliziumschicht 22 durch Aushebungen 31 unterbrochen, um einen lateralen Wärmefluß in der Siliziumschicht 22 zu unterbinden.

Das Beeinflussen von Licht im Halbleiterkörper erfolgt durch Heizen des SOI-Rippenwellenleiters 19 mittels der Heizeinrichtung 13 unter Ausnutzung des thermooptischen Effektes.

Die in der Siliziumschicht 22 vorgesehenen Aushebungen 31 und die Isolationsschicht 30 isolieren thermisch den SOI-Rippenwellenleiter 19 und reduzieren die zum Beeinflussen von Licht erforderliche Heizleistung.

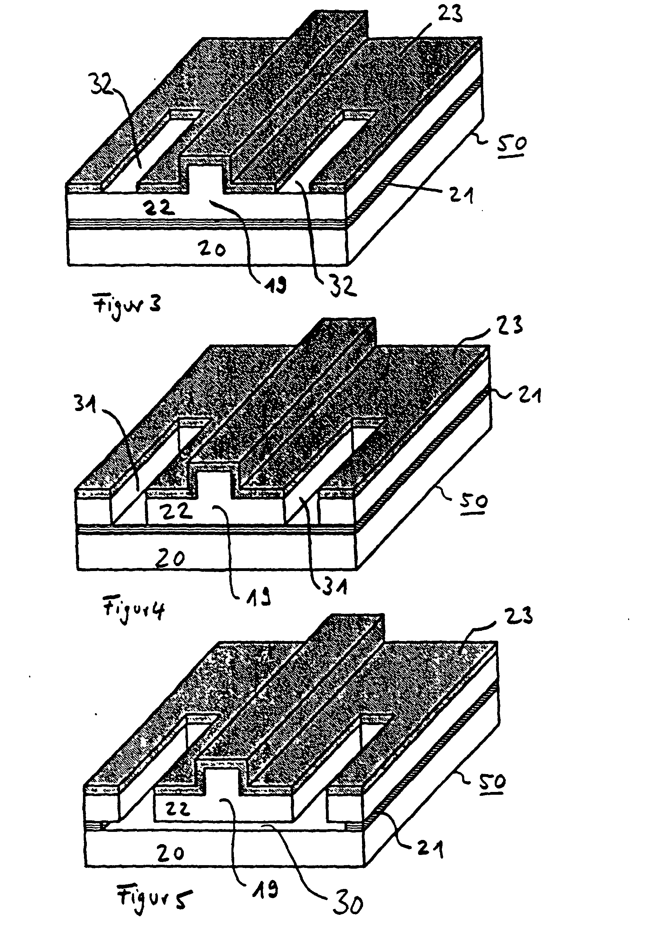

Die Figuren 3 bis 7 zeigen ein Ausführungsbeispiel eines erfindungsgemäßen Verfahrens zum Herstellen eines Halbleiterkörpers (perspektivische Darstellung entlang des Schnittes II-II in Figur 1) in den verschiedenen Herstellungsstadien. Man erkennt einen Grundkörper 50 mit dem Siliziumsubstrat 20, der darauf aufgebrachten Siliziumdioxidschicht 21 und der auf der Siliziumdioxidschicht 21 aufliegenden Siliziumschicht 22. In einer in der Siliziumschicht 22 vorgesehenen Rippe befindet sich der SOI-Rippenwellenleiter 19. Die Rippe kann beispielsweise durch Ätzen hergestellt sein. Auf der Siliziumschicht 22 befindet sich die Pufferschicht 23, die in Bereichen neben dem SOI-Rippenwellenleiter 19 durch einen Lithografie- und Ätzschritt unter Bildung von Öffnungen 32 entfernt worden ist. Die Pufferschicht 23 kann beispielsweise aus Siliziumnitrid (Si₃N₄) bestehen.

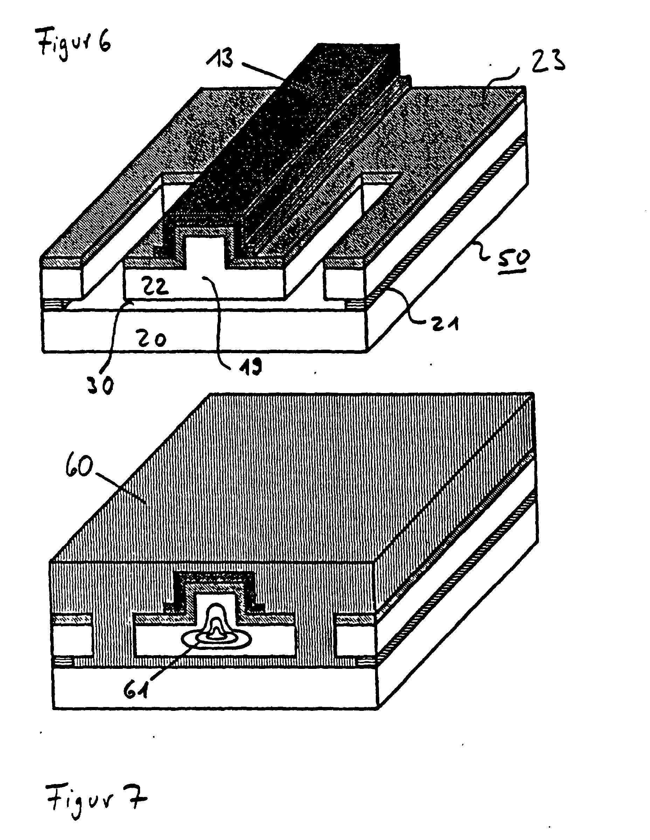

In Figur 4 ist der Grundkörper 50 dargestellt, nachdem im Bereich der Öffnungen 32 in der Pufferschicht 23 die Aushebungen 31 in die Siliziumschicht 22 vorgenommen worden sind. Dies kann beispielsweise durch Trockenätzen oder durch naßchemisch anisotropes Ätzen mit einer Kalilauge geschehen. Die Herstellung des Halbleiterkörpers bis zu diesem Stadium entspricht weitgehend dem angegebenen Stand der Technik.

Die aufgrund der Aushebungen 31 in der Siliziumschicht 22 nunmehr freiliegende Siliziumdioxidschicht 21 wird mittels naßchemisch isotropen Ätzens beispielsweise durch Flußsäure (HF) entfernt. Die Siliziumschicht 22 ist nun nicht mehr ganzflächig mit dem Siliziumsubstrat 20 mechanisch verbunden. Es entsteht eine freitragende Siliziumbrücke, die im Bereich ihrer beiden Enden im Grundkörper 50 gehalten ist (vgl. Figur 5). Der zwischen dem Siliziumsubstrat 20 und der Siliziumschicht 22 durch den Ätzschritt erzeugte Hohlraum bildet die Isolationsschicht 30.

Figur 6 zeigt den Grundkörper 50, nachdem die Heizeinrichtung 13 in Form eines Titanstreifens auf den Wellenleiter 19 aufgebracht worden ist. Das Aufbringen der Heizeinrichtung 13 kann beispielsweise durch Aufdampfen einer Titanschicht und nachfolgendes Wegätzen des Titans im Bereich außerhalb der Heizeinrichtung 13 erfolgen. Stattdessen ist auch ein Liftoff-Schritt möglich.

Der zwischen dem Siliziumsubstrat 20 und der Siliziumschicht 22 erzeugte Hohlraum kann beispielsweise auch mit einem Polymer 60 gefüllt werden. Stattdessen ist es auch möglich, den Hohlraum mit einem thermisch schlecht leitenden Gas zu füllen. Außerdem ist es möglich, den Halbleiterkörper derart zu verpacken, daß der Hohlraum evakuiert ist.

In der in dieser Weise hergestellten Siliziumbrücke können sich eine bzw. mehrere Lichtwellen 61 ausbreiten. Figur 7 zeigt den erfindungsgemäßen Halbleiterkörper.

Der Vollständigkeit halber sei darauf hingewiesen, daß die Pufferschicht 23 zwischen der Heizeinrichtung 13 und der Siliziumschicht 22 für die Funktionsweise des Halbleiterkörpers nicht unbedingt erforderlich ist. Auf die Pufferschicht 23 kann beispielsweise verzichtet werden, wenn die Heizeinrichtung 13 aus einem optisch nur wenig dämpfenden Material besteht.

Außerdem sei erwähnt, daß der erfindungsgemäße Halbleiterkörper in Kombination mit anderen Schalteranordnungen als dem beschriebenen Mach-Zehnder-Interferometer eingesetzt werden kann. Beispielsweise sind mit dem erfindungsgemäßen Halbleiterkörper NxM-Schaltmatritzen oder schaltbare Filter unter Einsatz von Richtkopplern oder MMI-Kopplern (MMI: Multi-Moden-Interferenz) realisierbar.

## Patentansprüche

1. Halbleiterkörper aus einem Siliziumsubstrat (20), einer darauf befindlichen Siliziumdioxidschicht (21) und einer darauf vorgesehenen Siliziumschicht (22) zum Beeinflussen von Licht mit
- in der Siliziumschicht (22) gebildeten, integriert-optischen Wellenleitern (19) und
- einer Heizeinrichtung (13) an mindestens einem der Wellenleiter (19),
**dadurch gekennzeichnet, dass**
- im Bereich der Heizeinrichtung (13) die Siliziumdioxidschicht (21) unterhalb des Wellenleiters durch eine Isolationsschicht (30) ersetzt ist,
- deren Material eine geringere thermische Leitfähigkeit als Siliziumdioxid aufweist.

2. Anordnung nach Anspruch 1,
**dadurch gekennzeichnet, daß**
die Isolationsschicht (30) aus einem Kunststoff besteht.

3. Anordnung nach Anspruch 1,
**dadurch gekennzeichnet, daß**
die Isolationsschicht (30) durch Gas oder Vakuum gebildet ist.

4. Verfahren zum Herstellen eines Halbleiterkörpers aus einem Siliziumsubstrat (20), einer darauf befindlichen Siliziumdioxidschicht (21) und einer darauf vorgesehenen Siliziumschicht (22) zum Beeinflussen
von Licht, bei dem
- in der Siliziumschicht (22) integriert-optische Wellenleiter (19) gebildet werden und
- eine Heizeinrichtung (13) an mindestens einem der Wellenleiter (19) hergestellt wird,
**dadurch gekennzeichnet, dass**
- im Bereich der Heizeinrichtung (13) die Siliziumdioxidschicht (21) unterhalb des Wellenleiters (19) durch einen Ätzschritt unter Bildung eines Hohlraumes entfernt wird.

5. Verfahren nach Anspruch 4,
**dadurch gekennzeichnet, daß**
durch den oder einen weiteren Ätzschritt ein Teil des Siliziumsubstrates (20) entfernt wird.

6. Verfahren nach Anspruch 4 oder 5,
**dadurch gekennzeichnet, daß**
der durch den einen Ätzschritt oder die Ätzschritte erzeugte Hohlraum unter Bildung einer Isolationsschicht (30) mit einem Kunststoff oder mit einem Gas gefüllt wird.

7. Verfahren nach Anspruch 4 oder 5,
**dadurch gekennzeichnet, daß**
der durch den einen Ätzschritt oder die Ätzschritte erzeugte Hohlraum unter Bildung einer Isolationsschicht (30) evakuiert wird.

## Claims

1. Semiconductor body comprising a silicon substrate (20), a silicon dioxide layer (21) situated thereon and a silicon layer (22) provided thereon and serving to influence light, having
- integrated optical waveguides (19) formed in the silicon layer (22) and
- a heating device (13) at at least one of the waveguides (19),
**characterized in that**
- in the region of the heating device (13), the silicon dioxide layer (21) below the waveguide is replaced by an insulation layer (30)
- whose material has a lower thermal conductivity than silicon

2. Arrangement according to Claim 1,
**characterized in that**
the insulation layer (30) comprises a plastic.

3. Arrangement according to Claim 1,
**characterized in that**
the insulation layer (30) is formed by gas or vacuum.

4. Method for producing a semiconductor body comprising a silicon substrate (20), a silicon dioxide layer (21) situated thereon and a silicon layer (22) provided thereon and serving to influence light, in which
- integrated optical waveguides (19) formed in the silicon layer (22) and
- a heating device (13) is produced at at least one of the waveguides (19),
**characterized in that**
- in the region of the heating device (13), the silicon dioxide layer (21) below the waveguide (19) is removed by an etching step to form a cavity.

5. Method according to Claim 4,
**characterized in that**
a part of the silicon substrate (20) is removed by the or a further etching step.

6. Method according to Claim 4 or 5,
**characterized in that**
the cavity produced by the one etching step or the etching steps is filled with a plastic or with a gas to form an insulation layer (30).

7. Method according to Claim 4 or 5,
**characterized in that**
the cavity produced by the one etching step or the etching steps is evacuated to form an insulation layer (30).

## Revendications

1. Corps à semi-conducteur constitué d'un substrat (20) en silicium, d'une couche (21) de dioxyde de silicium se trouvant dessus et d'une couche (22) de silicium prévue dessus pour moduler de la lumière comprenant
- des guides d'ondes (19) à optique intégrée formés dans la couche (22) de silicium et
- un dispositif (13) de chauffage sur au moins l'un des guides d'ondes (19),
**caractérisé en ce que**
- dans la zone du dispositif (13) de chauffage la couche (21) de dioxyde de silicium est remplacée en-dessous du guide d'ondes par une couche (13) isolante,
- dont la matière a une conductivité thermique plus petite que celle du dioxyde de silicium.

2. Dispositif suivant la revendication 1,
**caractérisé en ce que** la couche (30) isolante est en une matière plastique.

3. Dispositif suivant la revendication 1,
**caractérisé en ce que** la couche (30) isolante est formée par du gaz ou du vide.

4. Procédé de production d'un corps à semi-conducteur en un substrat (20) en silicium, d'une couche (21) de dioxyde de silicium se trouvant dessus et d'une couche (22) de silicium prévue dessus pour moduler de la lumière comprenant
- des guides d'ondes (19) à optique intégrée formés dans la couche (22) de silicium et
- un dispositif (13) de chauffage sur au moins l'un des guides d'ondes (19),
**caractérisé en ce que**
- on élimine dans la zone du dispositif (13) de chauffage la couche (21) de dioxyde de silicium en-dessous du conducteur (19) par un stade d'attaque avec formation d'une cavité.

5. Procédé suivant la revendication 4,
**caractérisé en ce que** l'on élimine une partie du substrat (20) en silicium par le stade d'attaque ou par un autre stade d'attaque.

6. Procédé suivant la revendication 4 ou 5,
**caractérisé en ce que** l'on emplit la cavité formée par le stade d'attaque ou les stades d'attaque d'une matière plastique ou d'un gaz avec formation de couche (30) isolante.

7. Procédé suivant la revendication 4 ou 5,
**caractérisé en ce que** l'on fait le vide dans la cavité produite par le stade d'attaque ou les stades d'attaque avec formation d'une couche (30) isolante.
